Europäisches Patentamt

European Patent Office

Office européen des brevets

(11) Publication number: **0 193 361**
**B1**

## EUROPEAN PATENT SPECIFICATION

(45) Date of publication of patent specification: **04.10.89**

(51) Int. Cl.⁴: **E 21 B 10/56**

(21) Application number: **86301244.9**

(22) Date of filing: **21.02.86**

(60) Divisional application **88120448.1 filed on 21/02/86.**

(54) Rotary drill bits and methods of manufacturing such bits'.

(30) Priority: **28.02.85 GB 8505244**

(43) Date of publication of application:
**03.09.86 Bulletin 86/36**

(45) Publication of the grant of the patent:
**04.10.89 Bulletin 89/40**

(84) Designated Contracting States:
**BE CH DE FR GB LI NL SE**

(56) References cited:
**EP-A-0 079 243**
**EP-A-0 090 658**
**US-A-3 938 599**
**US-A-4 168 923**
**US-A-4 186 628**
**US-A-4 221 270**

**THE OIL AND GAS JOURNAL, vol. 77, 19th February 1979, pages 111-114, Tulsa, US; C.F. HUFF et al.: "Bonding technique attaches Stratapax to drill bits"**

(73) Proprietor: **Reed Tool Company Limited Hycalog Oldends Lane Industrial Estate Stonehouse, Gloucestershire (GB)**

(72) Inventor: **Barr, John Denzil 2 Charlton Park Gate Cheltenham Gloucestershire (GB)**

(74) Representative: **Carter, Gerald et al Arthur R. Davies & Co. 27 Imperial Square Cheltenham GL50 1RQ Gloucestershire (GB)**

(56) References cited:
**WORLD OIL, vol. 190, no. 4, March 1980, pages 63-66,70, Texas, US; S.G. VARNADO et al.: "Studies aim at optimum design for PDC hard-formation bits"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to rotary drill bits for use in drilling or coring deep holes in sub-surface formations.

In particular, the invention relates to rotary drill bits of the kind comprising a bit body having a shank for connection to a drill string, a plurality of cutting elements mounted at the surface of the bit body, and a passage in the bit body for supplying drilling fluid to the surface of the bit body, each cutting element comprising a thin hard facing layer, defining a front cutting face, bonded to a less hard backing layer. For example, the hard facing layer may be formed of polycrystalline diamond or other super hard material, and the backing layer may be formed of cemented tungsten carbide. The two layer arrangement of the cutting element provides a degree of self-sharpening since, in use, the less hard backing layer wears away more easily than the harder cutting layer.

The pre-form cutting elements are usually mounted on the bit body by being bonded, for example, by brazing, to a carrier which may be in the form of a stud of tungsten carbide which is received and located in a socket in the bit body. Alternatively, the cutting element may be mounted directly on the bit body itself.

In use of such a drill bit, the bond between the backing layer and the carrier or bit body is subjected to shear stress and the cutting element itself is subjected to bending stresses.

When a drill bit is new, the cutting forces acting on the cutting element act through the cutting tip, that is to say the cutting edge where the front cutting face of the element engages the formation being cut. As drilling proceeds the cutting element wears forming a wear flat. During drilling the drill string may deflect laterally and vibrate causing the drill bit to rock so that the load distribution on the cutting elements fluctuates. Particularly when drilling through hard formation, the situation may arise where all of the "weight on bit" is applied to a few cutting elements, or even a single cutting element, near the edge of the bit. The maximum instantaneous load on a cutting element under such conditions depends to a certain extent on the area of that portion of the wear flat which is on the cutting element (another portion of the wear flat being on the carrier or bit body) and on the compressive strength of the formation.

The present invention is based on the concept that the maximum instantaneous load on a cutting element, and hence the shear stress on the bond between the cutting element and carrier or bit body, may be reduced by reducing the area of that portion of the wear flat which is on the cutting element, the reduction in area being effected by reducing the thickness of the cutting element.

As previously mentioned, the invention relates to drill bits where each cutting element comprises a thin hard facing layer, for example polycrystalline diamond, defining a front cutting face, bonded to a less hard backing layer, for example cemented tungsten carbide. A common form of preform cutting element of this type consists of a circular disc approximately 13.3 mm in diameter and approximately 3.3 mm in thickness. The diamond layer will normally be about 0.5 mm in thickness and the backing layer approximately 2.8 mm in thickness.

Typical drill bits having two-layer cutting elements are disclosed in US-A-4186628 and EP-A-079243.

According to the invention, a rotary drill bit of the kind first referred to is characterised in that the ratio of the thickness of the cutting element to the maximum width of the cutting face is not greater than 1:7, and in that the backing layer of the cutting element is diffusion bonded to a surface on the bit body or on a carrier mounted on the bit body.

The invention also provides a cutting structure, for use on a rotary drill bit, comprising a cutting element mounted on a surface of a carrier, the cutting element comprising a thin hard facing layer, defining a front cutting face, bonded to a less hard backing layer, characterised in that the ratio of the thickness of the cutting element to the maximum width of the cutting face is not greater than 1:7, and in that the backing layer of the cutting element is diffusion bonded to the surface of the carrier.

In a drill bit or cutting structure according to the invention the thickness of each cutting element is preferably not greater than 2.5 mm, and the thickness of the backing layer is not greater than 1.5 mm. Preferably also the thickness of the backing layer is not greater than twice the thickness of the hard facing layer.

The ratio of the thickness of the backing layer to the maximum width of the cutting face is not greater than 1:9.

As previously mentioned, the invention is applicable to rotary drill bits where the cutting elements comprise a thin hard facing layer and a less hard backing layer. Such cutting elements are normally not thermally stable at high temperatures, such as the infiltration temperatures necessary in the manufacture of matrix bodied drill bits. There are, however, now available thermally stable cutting elements which usually comprise a single layer of polycrystalline diamond material. In view of the difficulty of bonding such thermally stable cutting elements to a drill bit or carrier, it has been proposed that the single layer of polycrystalline diamond should have applied, at least to its rear surface, a very thin coating of another material to facilitate the bonding or brazing of that surface to a carrier or bit body. Such thin coatings, which may be only a few molecules thick, are not considered to constitute a "backing layer" in the terms of the present invention and such coated thermally stable cutting elements are not regarded as constituting the two layer cutting elements to which the present invention is applicable.

In arrangements according to the invention, intermediate layers of other materials, such as composite polycrystalline diamond and tungsten carbide, may be interposed between the facing layer and the backing layer of the cutting element.

The cutting element may be in the form of a substantially circular disc. The hard facing layer and the less hard backing layer, with or without any intermediate layers, are preferably, in known manner, bonded together in a forming press at ultra-high pressure and high temperature to produce the preform cutting element. However, the invention includes within its scope arrangements where the facing layer and backing layer are bonded together by other methods.

The invention includes within its scope arrangements where the cutting elements are mounted directly on the bit body as well as arrangements where the cutting elements are mounted on carriers, such as studs, which are received in sockets in the bit body.

In some embodiments of the invention the use of a thinner cutting element may reduce bending stresses in the hard facing layer and/or the backing layer, thus permitting the use of a material for the carrier or bit body which is softer or less rigid than that normally necessary to prevent fracture of the cutting element by bending. The use of a softer or less rigid material may improve the self-sharpening characteristics of the cutting assembly although it should be borne in mind that it may also make the assembly more subject to erosion in use.

A further possible advantage is that the reduction in thickness of the cutting element may reduce the temperature to which the bond between the backing layer and carrier or bit body is subjected while drilling. Thus, studies have suggested that during drilling the maximum temperature to which a cutting assembly is subjected may occur something like 5 mm behind the cutting face. The effect of using a thinner cutting element is to move the bond between the backing layer and the bit body of carrier forwardly with respect to this area of maximum temperature and this may reduce the temperature to which the bond is subjected by something of the order of 110°C.

The present invention may also reduce the cost of cutting elements. As previously mentioned, the diamond facing layer and backing layer are usually bonded together in a forming press at ultra-high pressure and high temperature. If the cutting elements are thinner than usual, according to the invention, a greater number may be formed during each press operation, reducing the unit cost. The number of elements to be formed at a time may also be increased by forming two elements back-to-back in the press, with a common backing layer between two diamond layers. After removal from the press the backing layer is divided centrally to give two cutting elements. For example, a back-to-back unit 3 mm in thickness may be cut and ground after forming to provide two elements each 1 mm in thickness.

Normally, a two-layer cutting element is usually bonded to its carrier or to the bit body by a process known as 'LS bonding'. If, as in preferred embodiments, the reduction in thickness of the cutting element is achieved by a reduction in thickness of the backing layer, this may result in the diamond layer being subject to higher temperatures during conventional bonding processes.

In a rotary drill bit according to the present invention, the cutting element is bonded to the bit body or carrier by a diffusion bonding process, which employs lower temperatures than current bonding processes, such as LS bonding.

The normal method of effecting diffusion bonding with structures of this type is by hot isostatic pressing and such method may be used to produce a cutting element/carrier assembly for use in the present invention. However, the equipment and process necessary for effecting hot isostatic pressing is complex and costly and preferably a simpler and less costly method of diffusion bonding a cutting element to a carrier is employed, as will be described.

The following is a detailed description of embodiments of the invention, by way of example, reference being made to the accompanying drawings in which:

Figure 1 is a side elevation of a typical drill bit of the kind to which the invention is applicable,

Figure 2 is an end elevation of the drill bit shown in Figure 1,

Figure 3 is a diagrammatic section through a prior art cutting element mounted on a stud in a bit body,

Figure 4 is a similar view to Figure 3 of another prior art arrangement,

Figure 5 is a similar view to Figure 3 showing an arrangement according to the present invention,

Figure 6 is an arrangement similar to Figure 4 but according to the present invention,

Figure 7 illustrates a stage in the manufacture of a cutting assembly suitable for use in the invention,

Figure 8 is a diagrammatic section through a device for use in manufacturing a cutting assembly for use in the invention, and

Figure 9 is a plan view of the device shown in Figure 8.

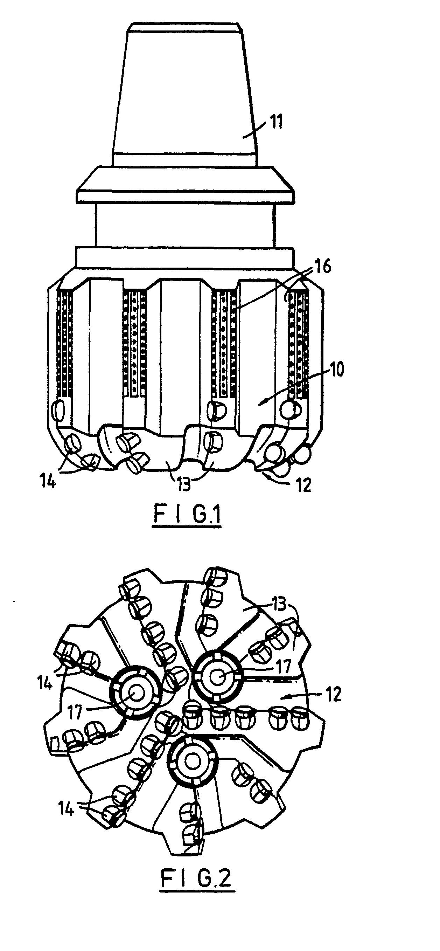

Referring to Figures 1 and 2, these show a full bore drill bit of a kind to which the present invention is applicable.

The bit body 10 is typically formed of carbide matrix infiltrated with a binder alloy, and has a threaded shank 11 at one end for connection to the drill string.

The operative end face 12 of the bit body is formed with a number of blades 13 radiating from the central area of the bit and the blades carry cutting members 14 spaced apart the length thereof.

The bit gauge section 15 includes kickers 16 which contact the walls of the borehole to stabilise the bit in the borehole. A central passage (not shown) in the bit body and shank delivers drilling fluid through nozzles 17 in the end face 12 in known manner.

It will be appreciated that this is only one example of the many possible variations of the type of bit to which the invention is applicable, including bits where the body is formed from steel.

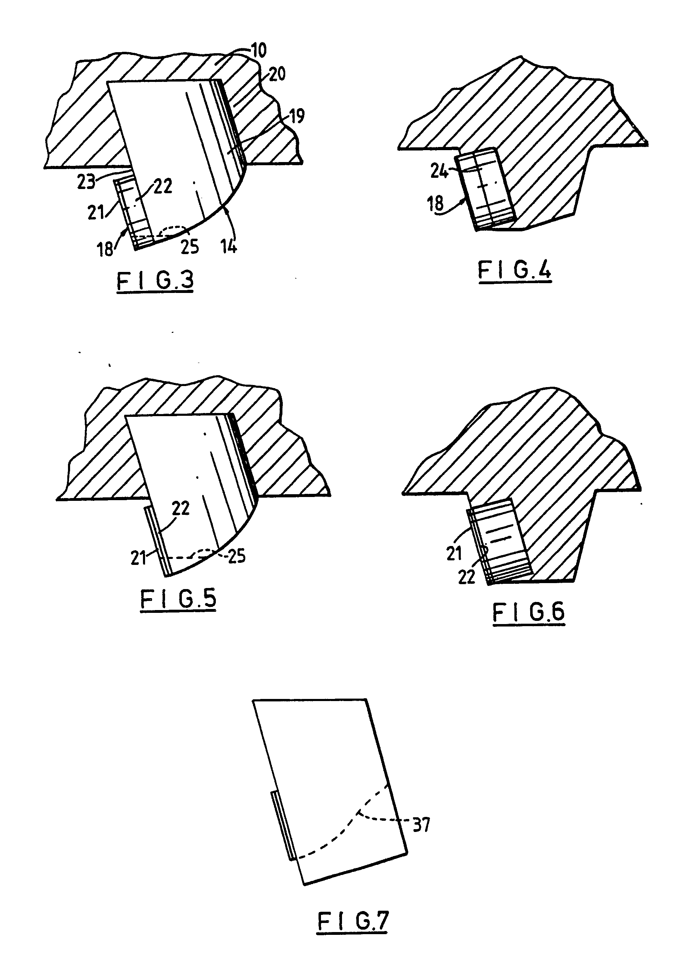

Referring to Figures 3 to 6, each cutting member 14 comprises a preform cutting element 18 mounted on a carrier 19 in the form of a stud which is located in a socket 20 in the bit body 10. Conventionally, each preform cutting element 18 is usually circular and comprises a thin facing layer 21 of polycrystalline diamond bonded to a backing layer 22, for example of tungsten carbide, both layers being of uniform thickness. The rear surface of the backing layer 22 is bonded, for example by brazing, to a suitably orientated surface on the stud 19 which may also be formed from tungsten carbide. In the arrangements shown in Figures 3 and 5 the front face 23 of the stud 19 on which the cutting element 18 is mounted is a flat face parallel to the longitudinal axis of the stud 19 and socket 20.

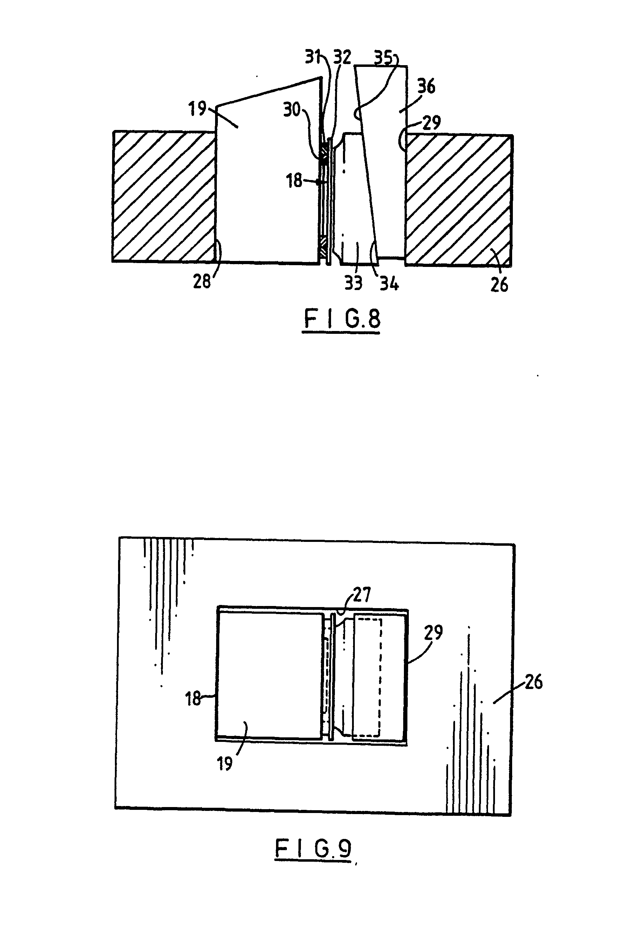

In the alternative arrangements shown in Figures 4 and 6, the circular cross section cutting element 18 is bonded to the end face of a cylindrical stud 24 which is coaxial with the cutting element 18. In each case the stud 19 or 24 may be brazed into its socket and/or may be an interference fit in the socket.

In the typical prior art arrangements shown in Figures 3 and 4, the cutting element 18 may, as previously mentioned, be approximately 3.3 mm thick and 13.3 mm in diameter. The polycrystalline diamond layer 21 may be typically. 5 mm in thickness whereas the backing layer is considerably thicker, being approximately 2.8 mm in thickness.

Figures 5 and 6 show arrangements according to the invention, corresponding to Figures 3 and 4 respectively, and it will be seen that in each case the backing layer 22 is considerably thinner than in the prior art arrangements. The reduction in overall thickness of the cutting element may be achieved primarily by reducing the thickness of the backing layer 22, but there may also be a reduction in thickness of the polycrystalline diamond layer 21. Typically, in arrangements according to the invention the overall cutter thickness is less than 2 mm (for example about 1 mm) and the thickness of the backing layer 22 may be less than I.5 mm. As previously mentioned, the thickness of the backing layer may be less than twice the thickness of the diamond layer.

In terms of the diameter, or other maximum width dimension of the cutting element in the case where it is not circular, the thickness of the cutting element is preferably less than 1/7th of the diameter of the element, compared with a prior art figure of approximately ⅟. Expressed in other terms, the thickness of the backing layer 22 is preferably less than 1/9th of the diameter of the cutting element whereas in the prior art the backing layer thickness is typically 1/5th of the diameter.

There is indicated by a dotted line 25 in Figures 3 and 5 a typical wear flat which is formed on the cutting member after some use of the drill bit. It will be seen that, due to the smaller thickness of the cutting element in the arrangement according to the invention in Figure 5, the area of the cutting element which engages the formation being cut is considerably less than it is with the prior art arrangement shown in Figure 3, and similar considerations will apply with the arrangements of Figures 4 and 6. As previously explained, this will considerably reduce the shear stress on the bond between the backing layer 22 and the stud 19 under extreme stress conditions due to a large proportion, or all, of the weight on bit being borne by the cutting element.

Due to the thinness of the backing layer 22 in arrangements according to the invention, difficulties may arise in bonding the cutting element to the post 19 by the method known as 'LS bonding' this being due to the diamond layer 21 being subjected to higher temperatures than it would normally be with a thicker backing layer. For example, LS bonding is effected at temperatures of the order of 950-1000°C whereas the diamond layer may be thermally stable up to temperatures of about 700-750°C. There must therefore be an adequate temperature gradient across the backing layer to protect the diamond layer. Other methods may therefore be used to bond the cutting element to the post using lower temperatures, for example a low temperature braze. A low temperature braze may be effected at about 690-710°C, but its shear strength will be less than that of LS bonding. However, this may be compensated for by the fact that the thinner cutting element of the invention results in the application of lower maximum shear stress to the bond, so that the lower strength of the braze may be adequate.

Another suitable lower temperature method is to bond the cutting element to the post by diffusion bonding. A conventional hot isostatic pressing process may be used in known manner to effect the diffusion bonding, if desired, but the invention also provides an improved diffusion bonding method in which pressure is mechanically applied to the cutting element. Such method is illustrated diagrammatically in Figures 8 and 9.

Referring to Figures 8 and 9, the apparatus for applying pressure to the cutting element comprises a rectangular one-piece metal frame 26 formed, for example, from tungsten carbide or a nickel alloy having a low coefficient of thermal expansion. The frame provides a central rectangular aperture 27 having end walls 28 and 29. The stud 19 is placed in the aperture with its rear surface engaging the face 28 of the aperture and its front surface bearing the cutting element 18. The cutting element is encircled by a first ring 30 of a softer material, such as copper, and a second outer ring 31 of a harder material such as steel. A copper shim disc 32 overlies the cutting element 18 and rings 30 and 31.

Placed in engagement with the copper shim 32 is an anvil 33 having an inclined rear face 34. The inclined rear face 34 of the anvil 33 is engaged by a similarly inclined face 35 on a wedge 36 which is engaged between the anvil 33 and the face 29 of the aperture in the frame 26.

By forcing the wedge 36 between the anvil 33 and the surface 29 a substantial mechanical compressive force may be applied to the cutting element, for example a force of 4,35 Pa (30,000 p.s.i.). The pre-loaded assembly is then placed in a suitable furnace having a reducing or inert atmosphere, for example at about 650°C for about four hours, for diffusion bonding to be effected.

It will be appreciated that, unlike conventional hot isostatic pressing, only a simple furnace arrangement is required, and a number of assemblies of the kind shown in Figures 8 and 9 may be pre-assembled and then packed within a furnace and heat treated simultaneously. The described method may thus substantially reduce the cost in capital equipment and in operating and use of equipment time.

It will be appreciated that the other normal considerations required for diffusion bonding will still apply. For example, the inter-engaging surfaces of the cutting element and stud require to be very flat and very clean to ensure that an effective diffusion bond is formed. The surfaces may be nickel plated or separated by a thin nickel foil. As previously mentioned the coefficient of thermal expansion of the frame 26 and other components may be so matched that the pressure is maintained at the elevated temperature in the furnace, or the coefficients may be so selected that the pressure increases due to the expansion of the elements.

The backing layer is usually cemented tungsten carbide, as previously mentioned, but other materials are possible, such as metallic tungsten, silicon carbide, iron, steel, titanium or chromium. The main requirement for the material is that it is such that it may be bonded to the diamond layer and, if diffusion bonding is to be used, that it should be capable of diffusion bonding to the stud which carries the cutting element. The carrier or stud will also normally be of cemented tungsten carbide but, again, other materials are possible such as steel, silicon carbide or 'stellite'. Where the stud is formed from steel or other material susceptible to erosion, it is preferably entirely shrouded and protected by the matrix bit body, as shown in Figure 4.

The arrangement shown in Figures 8 and 9 is only one example of how a cutting element and stud may be mechanically pre-loaded to effect diffusion bonding and other methods of mechanically pre-loading may be employed.

In order satisfactorily to use the method described in relation to Figures 8 and 9, it is desirable for the stud 19, at least at the end on which the cutting element is mounted, to be rectangular and parallel sided. If a different shape is required in the finished cutting assembly, the stud may be readily cut, for example by electro discharge machining, after the diffusion bonding has been effected. For example Figure 7 shows at 37 the manner in which the stud and cutter assembly may be shaped after diffusion bonding.

## Claims

1. A rotary drill bit comprising a bit body (10) having a shank (11) for connection to a drill string, a plurality of cutting elements (18) mounted at the surface of the bit body, and a passage in the bit body for supplying drilling fluid to the surface of the bit body, each cutting element comprising a thin hard facing layer (21), defining a front cutting face, bonded to a less hard backing layer (22), characterised in that the ratio of the thickness of the cutting element (18) to the maximum width of the cutting face is not greater than 1:7, and in that the backing layer of the cutting element is diffusion bonded to a surface on the bit body or on a carrier (19) mounted on the bit body.

2. A rotary drill bit according to Claim 1, characterised in that the thickness of each cutting element (18) is not greater than 2.5 mm.

3. A rotary drill bit according to Claim 1 or Claim 2, characterised in that the thickness of the backing layer (22) is not greater than 1.5 mm.

4. A rotary drill bit according to any of Claims 1 to 3, characterised in that the thickness of the backing layer (22) is not greater than twice the thickness of the hard facing layer (21).

5. A rotary drill bit according to any of Claims 1 to 4, characterised in that the ratio of the thickness of the backing layer (22) to the maximum width of the cutting face is not greater than 1:9.

6. A rotary drill bit according to any of Claims 1 to 5, characterised in that the facing layer (21) of each cutting element is formed of polycrystalline diamond and the backing layer (22) is formed of cemented tungsten carbide.

7. A rotary drill bit according to any of Claims 1 to 6, characterised in that an intermediate layer is interposed between the facing layer (21) and the backing layer (22) of each cutting element (18).

8. A rotary drill bit according to any of Claims 1 to 7, characterised in that each cutting element (18) is in the form of a substantially circular disc.

9. A rotary drill bit according to any of Claims 1 to 8, characterised in that each cutting element (18) is mounted on a carrier (19) received in a socket in the bit body.

10. A cutting structure, for use on a rotary drill bit, comprising a cutting element (18) mounted on a surface of a carrier (19), the cutting element comprising a thin hard facing layer (21), defining a front cutting face, bonded to a less hard backing layer, characterised in that the ratio of the thickness of the cutting element (18) to the maximum width of the cutting face is not greater than 1:7, and in that the backing layer of the cutting element is diffusion bonded to the surface of the carrier (19).

11. A cutting structure according to Claim 10, characterised in that the thickness of each cutting element (18) is not greater than 2.5 mm.

12. A cutting structure according to Claim 10 or Claim 11, characterised in that the thickness of the backing layer (22) is not greater than 1.5 mm.

13. A cutting structure according to any of Claims 10 to 12, characterised in that the thickness of the backing layer (22) is not greater than twice the thickness of the hard facing layer (21).

14. A cutting structure according to any of Claims 10 to 13, characterised in that the ratio of the thickness of the backing layer (22) to the maximum width of the cutting face is not greater than 1:9.

15. A cutting structure according to any of Claims 10 to 14, characterised in that the facing layer (21) of each cutting element is formed of polycrystalline diamond and the backing layer (22) is formed of cemented tungsten carbide.

16. A cutting structure according to any of Claims 10 to 15, characterised in that an intermediate layer is interposed between the facing layer (21) and the backing layer (22) of each cutting element (18).

17. A cutting structure according to any of Claims 10 to 16, characterised in that each cutting element (18) is in the form of a substantially circular disc.

**Patentansprüche**

1. Drehbohrmeißel mit einem Meißelkörper (10), der einen Schaft (11) zum Anschluß an ein Bohrgestänge hat, mehrere Schneidelemente (18), die an der Oberfläche des Meißelkörpers befestigt sind, und einen Durchlaß in dem Meißelkörper zur Zufuhr von Bohrspülmittel zu der Oberfläche des Meißelkörpers, wobei jedes Schneidelement eine dünne, harte Deckschicht (21) aufweist, welche eine vordere Schneidfläche bildet und mit einer weniger harten Tragschicht (22) verbunden ist, dadurch gekennzeichnet, daß das Verhältnis der Dicke des Schneidelements (18) zu der maximalen Breite der Schneidfläche nicht größer als 1:7 ist und daß die Tragschicht des Schneidelements mit einer Oberfläche an dem Meißelkörper oder an einem Träger (19), der an dem Meißelkörper befestigt ist, diffusionsverbunden ist.

2. Drehbohrmeißel nach Anspruch 1, dadurch gekennzeichnet, daß die Dicke jedes Schneidelements (18) nicht größer als 2,5 mm ist.

3. Drehbohrmeißel nach Anspruch 1 oder Anspruch 2, dadurch gekennzeichnet, daß die Dicke der Tragschicht (22) nicht größer als 1,5 mm ist.

4. Drehbohrmeißel nach einem der Ansprüche 1 bis 3, dadurch gekennzeichnet, daß die Dicke der Tragschicht (22) nicht größer als das Doppelte der Dicke der harten Deckschicht (21) ist.

5. Drehbohrmeißel nach einem der Ansprüche 1 bis 4, dadurch gekennzeichnet, daß das Verhältnis der Dicke der Tragschicht (22) zu der maximalen Breite der Schneidfläche nicht größer als 1:9 ist.

6. Drehbohrmeißel nach einem der Ansprüche 1 bis 5, dadurch gekennzeichnet, daß die Deckschicht (21) jedes Schneidelements aus polykristallinem Diamant gebildet ist und daß die Deckschicht (22) aus Sinterwolframcarbid besteht.

7. Drehbohrmeißel nach einem der Ansprüche 1 bis 6, dadurch gekennzeichnet, daß eine Zwischenschicht zwischen der Deckschicht (21) und der Tragschicht (22) jedes Schneidelements (18) angeordnet ist.

8. Drehbohrmeißel nach einem der Ansprüche 1 bis 7, dadurch gekennzeichnet, daß jedes Schneidelement (18) die Form einer im wesentlichen kreisförmigen Scheibe hat.

9. Drehbohrmeißel nach einem der Ansprüche 1 bis 8, dadurch gekennzeichnet, daß jedes Schneidelement (18) auf einem Träger (19) befestigt ist, der in einer Fassung in dem Meißelkörper aufgenommen ist.

10. Schneidgebilde zur Verwendung bei einem Drehbohrmeißel, mit einem Schneidelement (18), daß an einer Oberfläche eines Trägers (19) befestigt ist, wobei das Schneidelement eine dünne, harte Deckschicht (21) aufweist, die eine vordere Schneidfläche bildet und mit einer weniger harten Deckschicht verbunden ist, dadurch gekennzeichnet, daß das Verhältnis der Dicke des Schneidelements (18) zu der maximalen Breite der Schneidfläche nicht größer als 1:7 ist und daß die Tragschicht des Schneidelements mit der Oberfläche des Trägers (19) diffusionsverbunden ist.

11. Schneidgebilde nach Anspruch 10, dadurch gekennzeichnet, daß die Dicke jedes Schneidelements (18) nicht größer als 2,5 mm ist.

12. Schneidgebilde nach Anspruch 10 oder Anspruch 11, dadurch gekennzeichnet, daß die Dicke der Tragschicht (22) nicht größer als 1,5 mm ist.

13. Schneidgebilde nach einem der Ansprüche 10 bis 12, dadurch gekennzeichnet, daß die Dicke der Tragschicht (22) nicht größer als das Doppelte der Dicke der harten Deckschicht (21) ist.

14. Schneidgebilde nach einem der Ansprüche 10 bis 13, dadurch gekennzeichnet, daß das Verhältnis der Dicke der Tragschicht (22) zu der maximalen Breite der Schneidfläche nicht größer als 1:9 ist.

15. Schneidgebilde nach einem der Ansprüche 10 bis 14, dadurch gekennzeichnet, daß die Deckschicht (21) jedes Schneidelements aus polykristallinem Diamant gebildet ist und daß die Tragschicht (22) aus Sinterwolframcarbid gebildet ist.

16. Schneidgebilde nach einem der Ansprüche 10 bis 15, dadurch gekennzeichnet, daß eine Zwischenschicht zwischen der Deckschicht (21) und der Tragschicht (22) jedes Schneidelements (18) angeordnet ist.

17. Schneidgebilde nach einem der Ansprüche 10 bis 16, dadurch gekennzeichnet, daß jedes Schneidelement (18) die Form einer im wesentlichen kreisförmigen Scheibe hat.

**Revendications**

1. Trépan de forage rotatif comprenant un corps de trépan (10) comportant un fût (11) pour sa liaison avec une tige de forage, une pluralité d'éléments de coupe (18) montés à la surface du corps de trépan, et un passage, dans le corps de trépan pour alimenter un fluide de forage vers la surface du corps de trépan, chacun des éléments de coupe comprenant une couche d'attaque fine et dure (21), définissant une face de coupe frontale, fixée à une couche antérieure moins dure (22), caractérisé en ce que le rapport de l'épaisseur de l'élément de coupe (18) au maximum de largeur de la face de coupe est inférieur ou égal à 1/7, et en ce que la couche antérieure de l'élément de coupe est fixée par diffusion sur la surface du corps de trépan ou sur un support (19) monté sur le corps de trépan.

2. Trépan de forage rotatif suivant la revendication 1 caractérisé en ce que l'épaisseur de chaque élément de coupe (18) est inférieure ou égal à 2,5 millimètres.

3. Trépan de forage rotatif suivant l'une quelconque des revendications précédentes caractérisé en ce que l'épaisseur de la couche antérieure (22) est inférieure ou égale à 1,5 millimètres.

4. Trépan de forage rotatif suivant l'une quelconque des revendications précédentes caractérisé en ce que l'épaisseur de la couche antérieure (22) est inférieure ou égale à deux fois l'épaisseur de la couche d'attaque (21).

5. Trépan de forage rotatif suivant l'une quelconque des revendications précédentes caractérisé en ce que le rapport de l'épaisseur de la couche antérieure (22) au maximum de la largeur de la face de coupe est inférieur ou égal à 1/9.

6. Trépan de forage rotatif suivant l'une quelconque des revendications précédentes caractérisé en ce que la couche d'attaque (21) de chaque élément de coupe est formée de diamant polycristallin et la couche antérieure (22) est formée de carbure de tungstène cémenté.

7. Trépan de forage rotatif suivant l'une quelconque des revendications précédentes caractérisé en ce qu'une couche intermédiaire est interposée entre la couche d'attaque (21) et la couche antérieure (22) de chaque élément de coupe (18).

8. Trépan de forage rotatif suivant l'une quelconque des revendications précédentes caractérisé en ce que chaque élément de coupe (18) est en forme d'un disque sensiblement circulaire.

9. Trépan de forage rotatif suivant l'une quel-conque des revendications précédentes caracté-risé en ce que chaque élément de coupe (18) est monté sur un support (19) prenant place dans un logement du corps de trépan.

10. Structure de coupe pour trépan de forage rotatif comprenant un élément de coupe (18) monté sur la surface d'un support (19), l'élément de coupe comprenant une couche d'attaque fine et dure (21), définissant une face frontale de coupe, fixée sur une couche antérieure moins dure, caractérisée en ce que le rapport de l'épaisseur de l'élément de coupe (18) au maximum de la largeur de la face de coupe est inférieur ou égale à 1/7, et en ce que la couche antérieure de l'élément de coupe est fixée par diffusion sur la surface du support (19).

11. Structure de coupe suivant la revendication (10) caractérisée en ce que l'épaisseur de chaque élément de coupe (18) est inférieure ou égale à 2,5 millimètres.

12. Structure de coupe suivant la revendication 10 ou 11, caractérisée en ce que l'épaisseur de la couche antérieure (22) est inférieure ou égale à 1,5 millimètres.

13. Structure de coupe suivant l'une quelconque des revendications 10 à 12 caractérisée en ce que l'épaisseur de la couche antérieure (22) est inférieure ou égale à deux fois l'épaisseur de la couche d'attaque dure (21).

14. Structure de coupe suivant l'une quelconque des revendications 10 à 13 caractérisée en ce que le rapport de l'épaisseur de la couche antérieure (22) au maximum de la largeur de la face de coupe est inférieur ou égale à 1/9.

15. Structure de coupe suivant l'une quelconque des revendications 10 à 14 caractérisée en ce que la couche d'attaque (21) de chaque élément de coupe est formée de diamant polycristallin et en ce que la couche antérieure (22) est formée de carbure de tungstène cémenté.

16. Structure de coupe suivant l'une quelconque des revendications 10 à 15 caractérisée en ce qu'une couche intermédiaire est interposée entre la couche d'attaque (21) et la couche antérieure (22) de chaque élément de coupe (18).

17. Structure de coupe suivant l'une quelconque des revendications 10 à 16 caractérisée en ce que chaque élément de coupe (18) est sensiblement en forme de disque circulaire.

F I G.1

F I G.2

FIG.3

FIG.4

FIG.5

FIG.6

FIG.7

2

FIG.8

FIG.9